# DEMANDE DE BREVET EUROPEEN

(11) **EP 1 775 197 A2**
(43) Date de publication de la demande: **18.04.2007**
(21) Numéro de dépôt: 06300961.7
(22) Date de dépôt: 19.09.2006
(51) Int. Cl.: B62D 25/04, B62D 29/00

(54) **Structure de véhicule automobile**

(30) Priorité: 13.10.2005 FR 0553112
(71) Demandeur: PEUGEOT CITROËN AUTOMOBILES S.A., 78140 Velizy Villacoublay (FR)
(72) Inventeur: Cornière, Eric, 78640 Neauphle Le Château (FR)

(57) **Abrégé**

L'invention concerne une structure de véhicule automobile (1) comprenant au moins un module de renfort (2, 4, 5 ; 2) assurant une transmission des efforts d'un choc extérieur au travers des éléments de structure du véhicule, au moins un module de support (3 ; 3, 4, 5) coopérant avec tout ou partie dudit module de renfort (2, 4, 5 ; 2).

La structure de l'invention est remarquable en ce qu'elle comprend au moins un moyen faisant entretoise (5) agencé sur tout ou partie dudit module de renfort (2, 4) et/ou dudit module de support (3, 4), ledit moyen faisant entretoise (5) étant apte à passer d'un premier état solide à un second état solide afin de combler des jeux de montage entre ledit module de renfort (2, 4, 5 ; 2) et ledit module de support (3 ; 3, 4, 5).

## Description

L'invention se rapporte à une structure de véhicule automobile.

L'invention concerne plus particulièrement une structure de véhicule comportant un module de support, un module de renfort et un moyen faisant entretoise.

Il est connu de rigidifier une structure de véhicule automobile en utilisant des moyens de renfort, tels des tubes de renfort, disposés au niveau de zones de la structure qui sont sensibles à la déformation lors de chocs du véhicule. Ainsi, il est par exemple connu d'agencer un tube de renfort sur une zone de montant de baie afin de rigidifier les montants latéraux de baie. Le degré de rigidification de la structure du véhicule est une donnée très importante qu'il ne faut pas négliger pour répondre aux normes de sécurité.

Pour cela, il est notamment procédé à l'agencement d'au moins un élément de renfort 2 rapporté puis solidarisé à la structure 3 du véhicule. Une telle rigidification est préconisée afin d'éviter l'écrasement dudit montant de baie lorsque le véhicule se retourne mais aussi afin de répartir les efforts engendrés par un choc à l'ensemble des éléments de structure environnant. En fait, il est connu d'assembler un tube de renfort entre une ame de montant de baie et une doublure de montant de baie, à savoir entre deux pièces de la structure du véhicule. Cet assemblage est réalisé lors d'une préparation de ferrage afin de constituer un sous ensemble de pièces qui est destiné à coopérer en partie avec un pied avant de la structure du véhicule.

Etant donné que le tube de renfort ne doit pas se déformer en cas de choc, il est donc réalisé dans un matériau hautement résistant à la déformation. Il pourrait être réalisé dans un matériau de moindre dureté mais au détriment de sa section. Afin de rendre discret la présence d'un tel tube de renfort, voire dans l'optique de rendre le plus grâcieux possible la forme du montant de baie, il est préférée l'utilisation d'un tube de renfort de section contenue, réalisé par exemple dans un acier trempé contenant du bore. Pour cela, il faut également que le tube de renfort soit sensiblement de forme complémentaire à l'ensemble constitué du montant de baie et du pied avant.

Compte tenu de la difficulté qu'il y a de conformer un tel tube aux formes définies par celles de la structure du véhicule, leur montage sur la structure du véhicule est parfois imprécise. En effet, de tels tubes ont des indices de tolérance de fabrication importants de sorte que les jeux de montage qui sont requis pour leur mise en place et leur assemblage sur la structure sont conséquents, voire de l'ordre d'environ 5 millimètres en périphérie du tube.

La demanderesse a constaté que de tels jeux de montage ne permettent pas au tube de transmettre, de façon optimale, les efforts d'un choc extérieur au travers de la structure du véhicule. En effet, les jeux de montages en périphérie du tube ne permettent pas de transmettre l'intégralité des composantes des efforts d'un choc à la structure. Par conséquent, la présence de ces jeux de montages pénalise lourdement la prestation du véhicule vis à vis de la tenue aux chocs.

La présente invention a trait à une structure de véhicule automobile comprenant au moins un module de renfort assurant une transmission des efforts d'un choc extérieur au travers des éléments de structure du véhicule, au moins un module de support coopérant avec tout ou partie dudit module de renfort, palliant tout ou partie des inconvénients de l'art antérieur relevés ci-dessus.

A cette fin, la structure selon l'invention, par ailleurs conforme à la définition générique qu'en donne le préambule ci-dessus, est essentiellement caractérisé en ce qu'elle comprend au moins un moyen faisant entretoise agencé sur tout ou partie dudit module de renfort et/ou dudit module de support, ledit moyen faisant entretoise étant apte à passer d'un premier état solide à un second état solide afin de combler des jeux de montage entre ledit module de renfort et ledit module de support.

Par ailleurs, la structure de l'invention peut comporter l'une ou plusieurs des caractéristiques suivantes, prises séparemment ou en combinaison :
- soit le module de renfort comprend au moins un tube de renfort, un organe de maintien et ledit moyen faisant entretoise, et le module de support comprend au moins un élément de structure, soit le module de renfort comprend au moins un tube de renfort et le module de support comprend au moins un élément de structure, un organe de maintien et ledit moyen faisant entretoise,
- le module de renfort est lié de manière isostatique au module de support lorsque ledit moyen faisant entretoise est dans le premier état solide,
- la structure comprend au moins un cordon de soudure et une ouverture ménagée sur au moins un élément de structure, ledit cordon de soudure s'étendant le long de lignes de jointure entre le tube de renfort et l'élément de structure,
- le module de renfort est lié de manière hyperstatique au module de support lorsque ledit moyen faisant entretoise est dans le second état solide,
- ledit moyen faisant entretoise comprend un moins une plaque en mousse structurale qui est apte à augmenter de volume sous l'effet de la chaleur afin de rigidifier la structure du véhicule,
- la structure comprend au moins une plaque en mousse structurale collée sur une face intérieure d'un organe de maintien d'un tube de renfort, ladite face intérieure étant au regard du tube de renfort,
- la structure comprend au moins une plaque en mousse structurale collée sur une face extérieure d'un organe de maintien d'un tube de renfort, ladite face extérieure étant au regard d'un élément de structure,
- l'élément de structure est un montant de baie de véhicule automobile.

D'autres particularités et avantages apparaîtront à la lecture de la description ci-après faite, donnée à titre d'exemple et de manière non limitative, en référence aux figures dans lesquelles :
- la figure 1 est une vue en perspective d'une structure de véhicule automobile qui représente schématiquement l'agencement d'un élément de renfort sur la structure du véhicule, selon l'invention,
- la figure 2 est un agrandissement détaillant une partie de la structure de la figure 1 vue de l'intérieure du véhicule, représentant un montant de baie supportant un élément de renfort,
- la figure 3 est une vue en détail de la partie supérieure du montant de baie de la figure 2, dans laquelle est notamment repésenté un organe de support, un moyen faisant entretoise et une extrémité de l'élément de renfort,
- la figure 4 est une vue en coupe selon A-A de la figure 2,
- la figure 5 est une vue en perspective d'un organe de maintien de l'élément de renfort situé en partie inférieure de la figure 2,
- la figure 6 est une vue en coupe selon B-B de la figure 5.

La description d'un véhicule automobile composé d'une structure particulière, telle qu'elle sera donnée ci-après, fait référence aux termes « avant », « arrière », « gauche » et « droit » qui sont déterminés en fonction du sens normal de fonctionnement du véhicule.

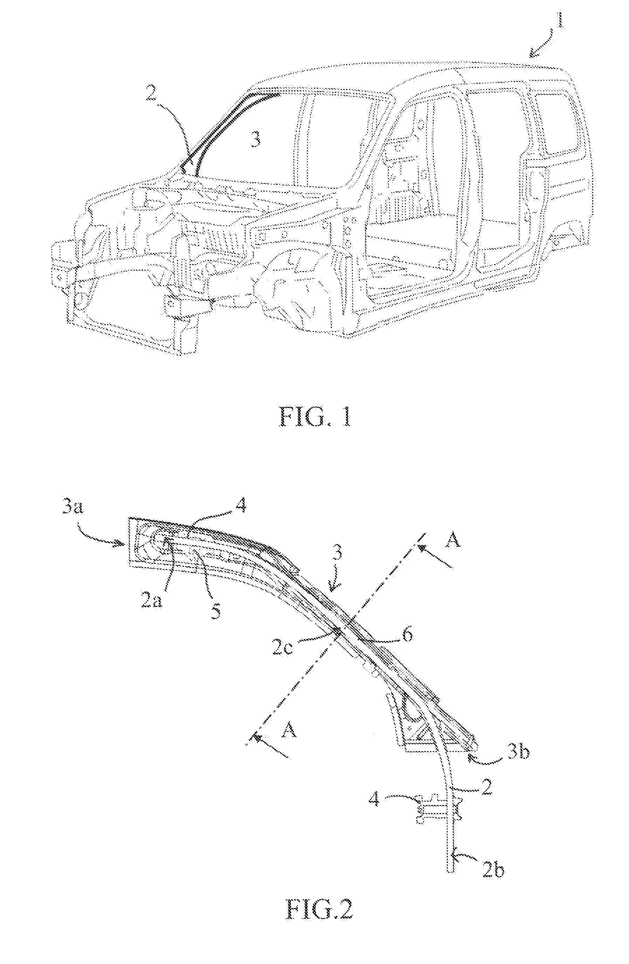

Afin de rigidifier localement la structure 1 d'un véhicule automobile , tel qu'illustrée en figure 1, au moins un élément de renfort 2 est agencé sur l'un ou plusieurs des éléments de structure 1 de sorte à transmettre les efforts d'un choc extérieur au travers d'au moins un élément de la structure comportant notamment l'élément de renfort.

Un véhicule automobile comprend ainsi une structure 1 sur laquelle sont montés les éléments de carrosserie et au moins un module de renfort.

Pour cela, tout ou partie des éléments de structure 3 fait office de module de support audit module de renfort 2.

Ce module de renfort 2 comprend de préférence au moins un tube de renfort 2 qui est rapporté durant une étape de ferrage qui a lieu au début de la fabrication du véhicule. Cette étape de ferrage consiste principalement à assembler, puis à solidariser les différents éléments 3 constitutifs de la structure du véhicule par le biais, par exemple, d'opérations de soudage.

La figure 1 illustre, à titre d'exemple et de manière schématique, l'agencement d'un module de renfort 2 sur une structure de véhicule automobile dont au moins un élément est représenté aux figures 2 à 6. Plus particulièrement, le module de renfort 2 est situé au niveau des montants de baie, le module de renfort 2 étant monté sur un côté latéral du pare-brise. Bien entendu, la structure du véhicule peut comprendre d'autres zones de rigidification qui nécessitent l'apport d'un élément de renfort complémentaire. Dans le mode de réalisation illustré en figures 1 et 2, le module de renfort 2 s'étend de préférence le long du montant de baie, du pied avant et se termine au niveau du soubassement de la structure, c'est-à-dire au niveau d'un longeron.

Bien entendu, un module de renfort similaire à celui-ci peut également être disposé sur un autre côté latéral du pare-brise du véhicule de sorte à ce que chaque montant de baie dispose d'un module de renfort 2.

Dans d'autre type de véhicule, le module de renfort 2 peut uniquement s'étendre entre le montant de baie et le pied avant. La figure 2 représente uniquement une partie de la structure d'un véhicule, à savoir un montant de baie 3 comportant des extrémités supérieure 3a et inférieur 3b qui sont respectivement reliées aux pieds avant et central (non représentés).

Dans un mode de réalisation préféré, le module de renfort se compose uniquement d'un tube de renfort 2 de section tubulaire, de préférence cylindrique au niveau des extrémités supérieure 2a et inférieure 2b, et de section sensiblement ovale en son milieu 2c. Chaque tube de renfort 2 est creux, sachant bien entendu qu'il peut également être plein. De plus, il est relié à au moins un module de support qui se compose du montant de baie 3, d'organes de support 4 rendus solidaires du montant de baie 3 et du pied avant.

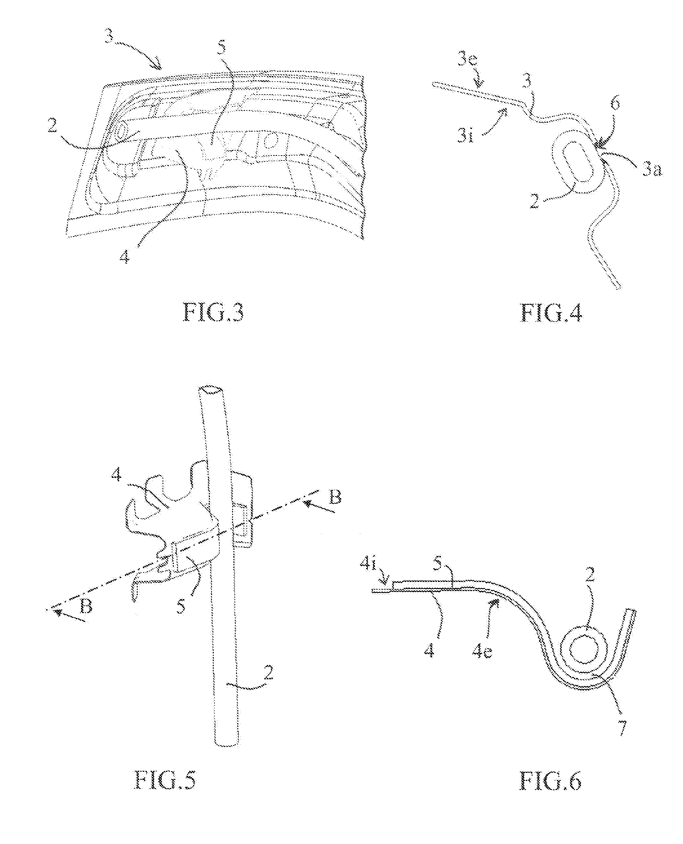

Les extrémités supérieure 2a et inférieure 2b du tube de renfort sont ainsi respectivement liées indirectement au montant de baie 3 et au pied avant. En effet, des organes de maintien 4 sont interposés entre le tube de renfort 2 et le montant de baie ou le pied avant. La partie centrale 2c est quant à elle directement liée au montant de baie 3. Pour cela, chaque organe de maintien 4 comprend au moins une face 4i incurvée de manière concave (Cf. FIG.6) qui est destinée à coopérer directement ou indirectement avec la périphérie extérieure du tube de renfort 2.

Le module de renfort comprend également un moyen faisant entretoise 5. En effet, alors même qu'une face extérieure 4e de chaque organe de maintien 4 coopère avec au moins un élément de structure 3, en l'espèce un montant de baie, une face intérieure 4i qui se trouve en regard du tube de renfort 2, comporte ledit moyen faisant entretoise 5. Pour cela, la face interne 4i est incurvée de manière concave (Cf. FIG.6) et est destinée à supporter ledit moyen faisant entretoise 5, lequel est destinée à coopérer avec tout ou partie de la périphérie extérieure du tube de renfort 2.

Ledit moyen faisant entretoise 5 comprend au moins un élément en mousse structurale, lequel est découpé dans une plaque en mousse structurale, qui est apte à augmenter de volume sous l'effet de la chaleur. Le profil de découpe de chaque plaque en mousse structurale 5 est faite selon la forme de l'organe de maintien 4 correspondant. Chaque plaque en mousse structurale est conformée selon la face interne 4i de l'organe de maintien.

Une telle plaque 5 en mousse structurale est avantageusement apte à augmenter d'épaisseur sous l'effet de la chaleur, passant ainsi d'un premier état solide à un second état solide. La plaque 5 en mousse comprend ainsi deux faces, l'une d'elles étant collée sur l'organe de maintien 4, par exemple sur la face interne 4i.

L'expansion de la mousse structurale, entre le premier et le second état solide, est provoquée par une mise en température obtenue par exemple par le passage de tout ou partie de la structure du véhicule dans un four après la cataphorèse. Ladite mousse structurale se compose d'une matière organique qui est apte à devenir stable et inerte après une opération de mise en température.

Une telle expansion permet avantageusement de combler les jeux de montage et de lier de manière hyperstatique le tube 2 sur chaque module de support. En fait, l'élément en mousse structurale 5 permet de lier mécaniquement le tube de renfort 2 aux organes de maintien 4, selon une liaison de type à encastrement. La mousse structurale assure avantageusement une liaison hyperstatique du tube de renfort 2 sur la structure du véhicule.

En effet, lorsque le tube de renfort 2 est assemblé sur le module de support composé des éléments de structure 3, des organes de maintien 4 et des éléments en mousse structurale 5, il est dans un premier temps lié de manière isostatique audit module de support par le biais d'au moins un cordon de soudure 6 réalisé au niveau de lignes de jointure obtenues par la mise en appui de la partie centrale 2c du tube 2 et de l'élément de structure 3. Pour permettre la réalisation des cordons de soudures 6, l'élément de structure 3 comporte au moins une ouverture 3a (Cf. FIG.4) reliant les faces extérieure 3e et intérieure 3i entre-elles. Ainsi les cordons de soudure 6 liant le tube de renfort 2 à l'élément 3 s'étendent de manière continue ou discontinue au travers d'au moins une ouverture 3a.

Dans un second temps, l'élément en mousse structurale 5 subit une expansion de matière qui comble les jeux de montage 7 (Cf. FIG.6) de sorte que les efforts d'un choc extérieur peuvent être transmis directement du tube de renfort 2 à chaque organe de maintien 4. La déformation de la structure du véhicule en cas de choc extérieur est ainsi mieux contrôlée.

Dans une variante de réalisation non représentée, le module de renfort comprend au moins un organe de maintien 4 et un tube de renfort 2. Le module de support comporte alors uniquement les éléments de structure 3 qui peuvent être un montant de baie et un pied avant. Le module de support, voire les modules de support et de renfort, comprend également un moyen faisant entretoise 5. Le moyen faisant entretoise 5 est alors agencé entre au moins un élément de structure 3 et au moins un organe de maintien 4. En effet, un élément en mousse structurale est collé sur la face extérieure 4e dudit organe de maintien 4, de sorte que l'expansion dudit organe de maintien 4 permette de combler les jeux de montage, tout en assurant de lier mécaniquement par une liaison de type encastrement chaque organe de support 4 à au moins un des éléments de structure 3.

## Revendications

1. Structure de véhicule automobile (1) comprenant au moins un module de renfort (2, 4, 5 ; 2) assurant une transmission des efforts d'un choc extérieur au travers des éléments de structure du véhicule, au moins un module de support (3 ; 3, 4, 5) coopérant avec tout ou partie dudit module de renfort (2, 4, 5 ; 2), **caractérisée en ce qu'**elle comprend au moins un moyen faisant entretoise (5) agencé sur tout ou partie dudit module de renfort (2, 4) et/ou dudit module de support (3, 4), ledit moyen faisant entretoise (5) étant apte à passer d'un premier état solide à un second état solide afin de combler des jeux de montage entre ledit module de renfort (2, 4, 5 ; 2) et ledit module de support (3 ; 3, 4, 5).

2. Structure selon la revendication 1, **caractérisée en ce que** le module de renfort comprend au moins un tube de renfort (2), un organe de maintien (4) et ledit moyen faisant entretoise (5), et **en ce que** le module de support comprend au moins un élément de structure (3).

3. Structure selon la revendication 1, **caractérisée en ce que** le module de renfort comprend au moins un tube de renfort (2) et **en ce que** le module de support comprend au moins un élément de structure (3), un organe de maintien (4) et ledit moyen faisant entretoise (5).

4. Structure selon l'une quelconque des revendications 1 à 3, **caractérisée en ce que** le module de renfort (2, 4, 5 ; 2) est lié de manière isotatique au module de support (3 ; 3, 4, 5) lorsque ledit moyen faisant entretoise (5) est dans le premier état solide.

5. Structure selon la revendication 4, **caractérisée en ce qu'**elle comprend au moins un cordon de soudure (6), une ouverture (3a) ménagée sur au moins un élément de structure (3), ledit cordon de soudure (6) s'étendant le long de lignes de jointure entre le tube de renfort (2) et l'élément de structure (3).

6. Structure selon l'une quelconque des revendications 1 à 5, **caractérisée en ce que** le module de renfort (2, 4, 5 ; 2) est lié de manière hyperstatique à au module de support (3 ; 3, 4, 5) lorsque ledit moyen faisant entretoise (5) est dans le second état solide.

7. Structure selon l'une quelconque des revendications 1 à 6, **caractérisée en ce que** ledit moyen faisant entretoise (5) comprend un moins une plaque en mousse structurale qui est apte à augmenter de volume sous l'effet de la chaleur afin de rigidifier la structure du véhicule.

8. Structure selon la revendication précédente, **caractérisée en ce qu'**elle comprend au moins une plaque en mousse structurale (5) collée sur une face intérieure (4i) d'un organe de maintien (4) d'un tube de renfort (2), ladite face intérieure (4i) étant au regard du tube de renfort (2).

9. Structure selon la revendication 7, **caractérisée en ce qu'**elle comprend au moins une plaque en mousse structurale (5) collée sur une face extérieure (4e) d'un organe de maintien (4) d'un tube de renfort (2), ladite face extérieure (4e) étant au regard d'un élément de structure (3).

10. Structure selon l'une quelconque des revendications 2 à 9, **caractérisée en ce que** l'élément de structure (3) est un montant de baie de véhicule automobile (1).
